(19) Europäisches Patentamt
European Patent Office
Office européen des brevets

(11) **EP 3 604 024 A1**

(12) **EUROPÄISCHE PATENTANMELDUNG**

(43) Veröffentlichungstag:
**05.02.2020 Patentblatt 2020/06**

(21) Anmeldenummer: **19189334.6**

(22) Anmeldetag: **31.07.2019**

(51) Int Cl.:
*B60L 53/12* (2019.01)          *B60L 53/122* (2019.01)
*H01F 27/28* (2006.01)          *H01F 38/14* (2006.01)
*H02J 1/00* (2006.01)          *H02J 50/10* (2016.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **31.07.2018 DE 102018118573**

(71) Anmelder: **Zollner Elektronik AG**
**93499 Zandt (DE)**

(72) Erfinder: **Jetz, Markus**
**94264 Langdorf (DE)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

(54) **INDUKTIVE LADEANORDNUNG MIT GETEILTER LITZE**

(57) Induktive Ladeanordnung (1) für Kraftfahrzeuge mit einer ersten Induktionsvorrichtung (2), welche insbesondere stationär angeordnet ist und einer zweiten Induktionsvorrichtung (4), welche an dem Kraftfahrzeug montierbar ist,
wobei die erste Induktionsvorrichtung (2) eine erste Spuleneinrichtung (20) aufweist und die zweit Induktionsvorrichtung (4) eine zweite Spuleneinrichtung (40) und die erste Spuleneinrichtung (22) und die zweite Spuleneinrichtung (42) zur induktiven Energieübertragung geeignet und bestimmt sind. Erfindungsgemäß weist wenigstens die erste Spuleneinrichtung (22) einen Anfangsabschnitt (24) auf, der elektrisch mit wenigstens einem weiteren elektrischen Element verbindbar ist sowie einen Endabschnitt, der elektrisch mit wenigsten einem weiteren elektrischen Element verbindbar ist, wobei die Spuleneinrichtung wenigstens zwei Leitungsstränge (32, 34) aufweist und diese beiden Leitungsstränge (32, 34) in dem Anfangsabschnitt (24) und in dem Endabschnitt (26) getrennt voneinander elektrisch mit dem weiteren elektrischen Element verbindbar sind.

Fig. 2

**Beschreibung**

Die vorliegende Erfindung bezieht sich auf eine induktive Ladeanordnung insbesondere für Kraftfahrzeuge. Aus dem Stand der Technik sind unterschiedliche Ladesysteme für Kraftfahrzeuge bekannt. Üblicherweise wird das Fahrzeug mit einem Kabel verbunden und über dieses Kabel geladen. In jüngerer Zeit sind jedoch auch induktive Ladesysteme entwickelt worden, welche auf einer induktiven Energieübertragung mittels Spulen basieren. Diese induktiven Ladesysteme sind erheblich bequemer zu handhaben als kabelgebundene Systeme, da der Kfz-Fahrer das Fahrzeug nur in eine bestimmte Position bringen muss und ansonsten der Ladevorgang automatisch vonstattengehen kann.

Allerdings weisen derartige Ladesysteme auch diverse Nachteile auf. So müssen sie beispielsweise sehr kompakt hergestellt werden, da ein Teil des Ladesystems in das Fahrzeug zu integrieren ist. Dies gilt insbesondere für die Anordnungen, welche beispielsweise Spulen und Ferritkörper aufweisen.

Der vorliegenden Erfindung liegt daher auch die Aufgabe zugrunde, den Platzbedarf für derartige Vorrichtungen zu senken. Auch soll eine Möglichkeit geschaffen werden, derartige Ladesysteme störfester zu gestalten als dies im Stand der Technik üblich ist.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße induktive Ladeanordnung für Kraftfahrzeuge weist eine erste Induktionsvorrichtung auf, welche insbesondere stationär angeordnet ist, sowie eine zweite Induktionsvorrichtung, welche an dem Kraftfahrzeug montierbar ist. Dabei weist die erste Induktionsvorrichtung eine erste Spuleneinrichtung auf und die zweite Induktionsvorrichtung weist eine zweite Spuleneinrichtung auf, und die erste Spuleneinrichtung und die zweite Spuleneinrichtung sind zur induktiven Energieübertragung geeignet und bestimmt.

Erfindungsgemäß weist wenigstens eine Spuleneinrichtung einen Anfangsabschnitt auf, der elektrisch mit wenigstens einem weiteren elektrischen Element verbindbar ist sowie einen Endabschnitt, der elektrisch mit wenigstens einem weiteren Element verbindbar ist, wobei die Spuleneinrichtung wenigstens zwei Leitungsstränge aufweist und diese beiden Leitungsstränge in dem Anfangsabschnitt und in dem Endabschnitt getrennt voneinander (insbesondere elektrisch getrennt voneinander) elektrisch mit dem weiteren elektrischen Element verbindbar sind.

Es wird daher eine Spuleneinrichtung vorgeschlagen, welche nicht nur, wie auch aus dem internen Stand der Technik der Anmelderin bekannt, wenigstens zwei abschnittsweise voneinander getrennte Stränge aufweist, sondern diese Stränge, die im internen Stand der Technik gemeinsam beschalten bzw. kontaktiert werden, werden ebenfalls getrennt voneinander kontaktiert bzw. beschaltet.

Auf diese Weise entstehen faktisch bzw. elektrisch betrachtet zwei voneinander getrennte Spuleneinrichtungen, die auch getrennt beschaltet werden. Auf diese Weise kann insgesamt beispielsweise die Windungsanzahl der Spuleneinrichtung in einfacher Weise verdoppelt werden. Bevorzugt entstehen auf diese Weise zwei Spuleneinrichtungen mit jeweils der gleichen Windungszahl.

Es wird daher vorgeschlagen, dass eine Spuleneinrichtung bzw. eine Litze in mehrere Stränge aufgespalten wird, die insbesondere unabhängig voneinander beschaltet werden. Der jeweilige Spulenquerschnitt wird damit dann aus dem Querschnitt des jeweiligen Stranges gebildet, welcher wiederum bevorzugt aus vielen Einzeladern aufgebaut ist.

Bei einer bevorzugten Ausführungsform berühren sich die beiden Leitungsabschnitte wenigstens abschnittsweise zwischen dem Anfangsabschnitt und dem Endabschnitt, oder werden eng beieinander geführt. Dies bedeutet, dass sich die beiden Leitungsstränge bevorzugt im Wesentlichen parallel zueinander erstrecken. Dabei kann jedoch der Verlauf der Litzen auch gekrümmt sein. Diese können beispielsweise miteinander verseilt sein. In diesem Falle sind die Litzen zwar gekrümmt aber verlaufen dennoch im Wesentlichen parallel zueinander.

Bei einer bevorzugten Ausführungsform kontaktieren sich die beiden Leitungsstränge einander zumindest abschnittsweise zwischen dem Anfangsabschnitt und dem Endabschnitt mechanisch.

Bei einer bevorzugten Ausführungsform sind die beiden Leitungsstränge wenigstens abschnittsweise und besonders bevorzugt vollständig galvanisch voneinander getrennt. Dabei ist es möglich, dass die Leitungsstränge elektrisch bezüglich einander isoliert sind, was beispielsweise mittels Lacken und/oder Folien- und/oder Seidenumspinnungen, die sich auf den einzelnen Leitungssträngen befinden, möglich ist.

Eine derartige Lackierung bzw. Folien- und/oder Seidenumspinnungen der einzelnen Stränge kann einen Stromfluss zwischen den Strängen vermeiden. Bei einer weiteren vorteilhaften Ausführungsform sind die beiden Leitungsstränge magnetisch miteinander gekoppelt. So ist es beispielsweise möglich, dass für die Spuleneinrichtung eine Hochfrequenzlitze (auch HF-Litze genannt) Verwendung findet. Eine Hochfrequenzlitze ist eine Litze, die aus einer größeren Anzahl feiner und oftmals durch Lack voneinander isolierter Drähte bzw. Stränge besteht. Diese sind insbesondere so verflochten, dass im Mittel jeder Einzeldraht möglichst jede Stelle im Querschnitt der Litze gleich oft einnimmt.

Bevorzugt weisen diese beiden Stränge eine magnetische Kopplung von mehr als 70 %, bevorzugt mindestens 80 % und besonders bevorzugt mindestens 90 % auf. Dies bedeutet, dass das magnetische Feld eines der beiden Stränge auch zu mehr als 70 %, bzw. 80 % bzw. 90 % den anderen Strang erfasst.

Bevorzugt wird die hohe magnetische Kopplung durch eine enge Wicklung zwischen den Strängen erreicht. So könnte beispielsweise eine bifilare Wicklung verwendet werden.

Eine höhere Güte einer derartigen Spuleneinrichtung kann sich daraus ergeben, dass effektiv eine Vergrößerung des effektiv am Stromfluss beteiligten Querschnitts erfolgt. Dieser Querschnitt ist bei einem Volldraht beispielsweise durch den sogenannten Skineffekt und den Proximity-Effekt eingeschränkt. Der Skineffekt beschreibt eine Ladungsträgerverdrängung aufgrund eines wechselnden Magnetfelds der Einzelleiter. Der Proximity-Effekt ist ein Effekt der, genauso wie der Skineffekt, nur bei Wechselströmen und wechselnden Magnetfeldern auftritt und zu einer Stromverdrängung bzw. Stromeinschnürung zwischen zwei eng benachbarten Leitern führen kann.

Bei einer weiteren bevorzugten Ausführungsform ist das wenigstens eine elektrische Element ein Kondensator. Dies bedeutet, dass die Spuleneinrichtung in wenigstens dem Anfangsabschnitt oder dem Endabschnitt aufgetrennt wird und jeweils einer der genannten Stränge mit einem Kondensator beschaltet wird und bevorzugt beide dieser Stränge mit einem Kondensator beschaltet werden.

Bevorzugt weisen die an einem Ende der Stränge bzw. Litzen anliegenden Kondensatoren eine Gesamtkapazität auf, die höher ist als 20 nF, bevorzugt höher als 40 nF, bevorzugt höher als 50 nF.

Bevorzugt weisen die an einem Ende der Litzen anliegenden Kondensatoren eine Gesamtkapazität auf, die geringer ist als 800 nF, bevorzugt geringer als 600 nF, bevorzugt geringer als 500 nF.

Bei einer weiteren bevorzugten Ausführungsform werden auch in dem jeweils anderen Anfangs- bzw. Endabschnitt wenigstens ein Leitungsstrang mit einem Kondensator und bevorzugt beide Leitungsstränge mit einem Kondensator beschaltet. Bevorzugt sind daher wenigstens zwei Stränge vorgesehen, welche endseitig mit vier Kondensatoren beschaltet sind.

Bevorzugt weisen auch diese Kondensatoren eine Gesamtkapazität auf, die höher ist als 20 nF, bevorzugt höher als 40 nF, bevorzugt höher als 50 nF. Bevorzugt weisen auch diese Kondensatoren eine Gesamtkapazität auf, die geringer ist als 800 nF, bevorzugt geringer als 600 nF, bevorzugt geringer als 500 nF.

Bevorzugt ist die Gesamtkapazität an einem Ende der Litzen im Wesentlichen gleich der Gesamtkapazität an dem anderen Ende der Litzen. Unter im Wesentlichen gleich wird dabei verstanden, dass diese Kapazitäten um nicht mehr als 10 % voneinander abweichen.

Bei einer weiteren bevorzugten Ausführungsform ist daher wenigstens einer der beiden Leitungsstränge und bevorzugt beide Leitungsstränge sowohl mit ihrem Anfangsabschnitt als auch mit ihrem Endabschnitt elektrisch jeweils mit einem Kondensator verbunden. Bevorzugt handelt es sich hierbei um gleichartige Kondensatoren und insbesondere um Kondensatoren gleicher Kapazität.

Dabei kann die Beschaltung mit dem Kondensator unmittelbar oder mittelbar erfolgen, das heißt es wäre auch denkbar, dass zwischen dem Endabschnitt und dem Kondensator noch ein weiteres elektrisches Element, wie etwa ein Widerstand, geschaltet ist.

Bei einer weiteren vorteilhaften Ausführungsform weist die Ladeanordnung einen dritten Leitungsstrang auf, wobei bevorzugt auch dieser dritte Leitungsstrang sowohl den ersten Leitungsstrang als auch den zweiten Leitungsstrang mechanisch kontaktiert. So wäre es möglich, dass diese drei Leitungsstränge miteinander verseilt sind. Bevorzugt sind auch die Endabschnitte dieses dritten Leitungsstrangs mit elektrischen Elementen verbindbar und insbesondere in den Anfangs- und/oder Endabschnitten mit elektrischen Elementen wie insbesondere aber nicht ausschließlich Kondensatoren verbindbar.

Weiterhin wäre es auch denkbar, dass die Spuleneinrichtung mehr als drei Leitungsstränge, etwa 4 oder 5 Leitungsstränge aufweist. Bevorzugt sind auch diese mehreren Leitungsstränge miteinander gut magnetisch gekoppelt.

Die vorliegende Erfindung bezieht sich weiterhin auf eine Spuleneinrichtung, insbesondere für eine induktive Ladeanordnung. Diese weist einen Anfangsabschnitt auf, der elektrisch mit wenigstens einem weiteren elektrischen Element verbindbar ist sowie einen weiteren Abschnitt, insbesondere einen Endabschnitt, der elektrisch mit wenigstens einem weiteren elektrischen Element verbindbar ist.

Dabei weist die Spuleneinrichtung wenigstens zwei Leitungsstränge auf, und diese beiden Leitungsstränge sind in dem Anfangsabschnitt und in dem Endabschnitt getrennt voneinander elektrisch mit weiteren elektrischen Elementen verbindbar, wobei die Leitungsstränge sich zumindest abschnittsweise zwischen dem Anfangsabschnitt und dem Endabschnitt berühren oder eng beieinander geführt werden und wobei die beiden Leitungsstränge galvanisch voneinander getrennt sind.

Es wird also auch hier eine Spule vorgeschlagen, die insbesondere für induktive Ladesysteme Anwendung finden kann, aber auch denkbar in anderen technischen Bereichen Anwendung finden kann. Auch hier wird vorgeschlagen, dass diese Spuleneinrichtung nicht nur zwei voneinander getrennte Leitungsstränge aufweist, sondern diese auch noch unabhängig voneinander beschaltet sind.

Die vorliegende Erfindung ist weiterhin auf eine induktive Ladeanordnung für Kraftfahrzeuge gerichtet, welche eine erste Induktionsvorrichtung aufweist, welche insbesondere stationär angeordnet ist, und eine zweite Induktionsvorrichtung, welche an dem Kraftfahrzeug montierbar ist. Dabei weist die erste Induktionsvorrichtung eine erste Spuleneinrichtung auf und die zweite Induktionsvorrichtung weist eine zweite Spuleneinrichtung auf, und die erste Spuleneinrichtung und die zweite Spuleneinrichtung sind zur induktiven Energieübertragung geeignet und bestimmt.

Erfindungsgemäß weist jede die Spuleneinrichtung einen Anfangsabschnitt auf, der elektrisch mit wenigstens einem weiteren elektrischen Element verbindbar ist, sowie einen Endabschnitt, der elektrisch mit wenigstens einem weiteren elektrischen Element verbindbar ist, wobei die Spuleneinrichtung wenigstens zwei Leitungsstränge aufweist und diese beiden Leitungsstränge in dem Anfangsabschnitt und dem Endabschnitt (insbesondere elektrisch) getrennt voneinander elektrisch mit den weiteren elektrischen Elementen verbindbar sind.

Auch hier wird vorgeschlagen, dass faktisch wenigstens zwei Spulen entstehen, die bevorzugt die gleiche Windungszahl aufweisen. Dabei ist es möglich, dass eine Litze bzw. eine Spule an einem Ende in mehrere Stränge aufgespalten wird, die insbesondere unabhängig voneinander beschaltet werden können. Bevorzugt sind dabei die besagten Spulen bzw. die Einzelspulen einer Spuleneinrichtung magnetisch gut miteinander gekoppelt.

Auch können getrennte Litzen vorgesehen sein, welche jedoch gemeinsam miteinander geführt werden, sodass physikalisch zwei getrennte Spulen entstehen können.

Bevorzugt weisen diese beiden Stränge (oder im Falle mehrerer Stränge auch diese mehreren Stränge) eine magnetische Kopplung von mehr als 70 % bevorzugt mindestens 80 % und besonders bevorzugt mindestens 90 % auf. Dies bedeutet, dass das magnetische Feld eines der beiden Stränge auch zu mehr als 70 %, bzw. 80 % bzw. 90 % den anderen Strang erfasst.

Bei einer bevorzugten Ausführungsform ist der Spuleneinrichtung eine Steuerungseinrichtung nachgeschaltet oder vorgeschaltet, welche dazu geeignet und bestimmt ist, die zwischen der zweiten Spuleneinrichtung und einer Last oder einem elektrischen Netz und der ersten Spuleneinrichtung fließende Ströme zu beeinflussen bzw. einen vorgegebenen Stromfluss zu ermöglichen.

Falls es sich bei der betreffenden Spuleneinrichtung um die Spuleneinrichtung der ersten Induktionsvorrichtung handelt, ist dieser insbesondere eine elektronische Schaltung und/oder Steuerungseinrichtung vorgeschaltet. Falls es sich bei der Spuleneinrichtung um die Spuleneinrichtung der zweiten Induktionsvorrichtung handelt, ist der Spuleneinrichtung insbesondere eine elektrische bzw. eine elektronische Schaltung und/oder Steuereinrichtung nachgeschaltet.

Die Begriffe vorgeschaltet und nachgeschaltet werden hier unter Bezug auf eine Energieflussrichtung von der ersten Spuleneinrichtung hin zu der zweiten Spuleneinrichtung verstanden.

Bei einer weiteren vorteilhaften Ausführungsform weist die Steuerungseinrichtung eine Spannungsvervielfacherschaltung und insbesondere eine Spannungsdopplerschaltung auf. Bei dieser Ausführungsform kann insbesondere eine sogenannte Delon-Schaltung Anwendung finden.

Insbesondere handelt es sich dabei um eine Schaltung, welche wenigstens einen und bevorzugt zwei Kondensator/en aufweist/aufweist.

Bei einer weiteren vorteilhaften Ausführungsform weist diese Steuerungseinrichtung eine Gleichrichtereinheit auf. Besonders bevorzugt weist die Steuerungseinheit wenigstens eine Gleichrichtereinheit auf. So ist es auch möglich, dass mehrere Gleichrichtereinheiten vorgesehen sind, wobei besonders bevorzugt einer Litze bzw. einem Leitungsstrang der Spuleneinrichtung eine Gleichrichtereinheit zugeordnet ist.

So könnte beispielsweise für jeden einzelnen Leitungsstrang jeweils eine Gleichrichtereinheit vorgesehen sein. Besonders bevorzugt kann es sich bei der Gleichrichtereinheit um eine Vollbrückengleichrichtereinheit handeln. Daneben können auch Delon-Schaltungen Anwendung finden.

Bei einer weiteren vorteilhaften Ausführungsform weist die Ladeanordnung eine DC/DC-Wandlereinrichtung auf, welche insbesondere der Steuerungseinrichtung nachgeschaltet ist. Es ist aber auch möglich auf die nachgeschaltete DC/DC-Wandlereinrichtung zu verzichten und den Ausgang der Gleichrichtereinheit direkt mit der zu ladenden Batterie zu verbinden.

Durch die oben erwähnte Spannungsvervielfachungseinrichtung und insbesondere Spannungsdoppeleinrichtung können Vorteile erreicht werden. Auf diese Weise ist es beispielsweise möglich, dass die Hochspannung bzw. Hochfrequenzspannung an der Wicklung reduziert beispielsweise halbiert wird.

Bei einer bevorzugten Ausführungsform finden für die Gleichrichtereinrichtungen SI-Dioden mit Anwendung. Diese sind kostengünstiger als SIC Dioden, weisen jedoch einen negativen Temperturkoeffizient auf, welcher die Stromsymmetrierung parallel geschalteter Dioden oder Gleichrichtereinheiten erschwert. Die Verwendung der hier beschriebenen Kondensatoren, insbesondere in der hier beschriebenen Art- und Weise ermöglicht eine Stromsymmetrierung parallel geschalteter Gleichrichtereinheiten welche aus Si-Dioden aufgebaut sind und beseitigt den Nachteil des negativen Temperaturkoeffizienten.

Besonders bevorzugt kann, wie oben erwähnt, eine Hochfrequenzlitze Anwendung finden.

Bei einer weiteren vorteilhaften Ausführungsform weist die Steuereinrichtung oder allgemein die Ladeanordnung eine Schalteinrichtung auf, welche insbesondere zwischen einer Diode und einem Kondensatorelement angeordnet ist, und welche besonders bevorzugt ein Umschalten zwischen einer Gleichrichtereinheit und einer Spannungsvervielfachereinheit ermöglicht.

Besonders bevorzugt handelt es sich bei dieser Schalteinrichtung um einen Halbleiterschalter, besonders bevorzugt um einen wenigstens unidirektional sperrfähigen Halbleiterschalter (z.B. ein MosFET), besonders bevorzugt um einen bidirektional sperrfähigen Halbleiterschalter (z.B. ein zwei MosFet's aufweisendes Bauteil). Auch ein mechanischer Kontakt wie z. B. der Kontakt eines Relais wäre an dieser Stelle denkbar.

Bei dieser Ausgestaltung kann durch das Öffnen dieses Schalters eine Ausgangsspannung des Gleichrichters und damit eine Eingangsspannung einer nachfolgenden Einheit und insbesondere, aber nicht ausschließlich eines DC/DC-Wandlers schlagartig auf die Hälfte reduziert werden. Auf diese Weise kann die betreffende Elektronik sehr effektiv geschützt werden.

Wie oben erwähnt kann sowohl die erste Spuleneinrichtung als auch die zweite Spuleneinrichtung in mehrere Stränge aufgeteilt werden. Insbesondere im Falle der ersten Spuleneinrichtung, die auch als Sendespule bezeichnet werden kann, ergibt sich bei der Ausbildung durch mehrere Litzen oder Stränge der gleiche Aufbau wie bei einer herkömmlichen Spule, und insbesondere ein identisches Kupferbild. Besonders bevorzugt ist an den Spulenrichtungen ein resonanter Abschluss angeordnet. So ist es möglich, dass die Spuleneinrichtung etwa gemeinsam mit einem oder zwei Kondensatoren einen Schwingkreis bildet. Auf diese Weise stellt sich bei einer Ausprägung mit zwei Litzen oder Strängen bevorzugt effektiv eine Induktivität ein, die ein Viertel eines herkömmlichen Aufbaus entspricht.

Zu diesem Zweck ist es insbesondere vorteilhaft, wenn die wenigstens zwei Stränge magnetisch stark miteinander gekoppelt sind, insbesondere eine Kopplung von mehr als 80 %, bevorzugt von mehr als 90 % aufweisen.

Um mit der Spule aus zwei Litzen oder Strängen und der Induktivität L/4 ein äquivalentes Magnetfeld im Vergleich zu herkömmlichen Aufbau mit nur einem Strang und der Spuleninduktivität L zu erzeugen, muss der doppelte Strom fließen. Damit stellt sich zwischen jeweiligen Spulenenden die Spannung UL/2 ein welche nur die Hälfte der Spannung UL im herkömmlichen Aufbau entspricht. Dies wird in der Bezugnahme auf die Figuren genauer erläutert.

Wie oben erwähnt, ist bevorzugt eine DC/DC-Wandlereinrichtung vorgesehen, die der Steuerungseinrichtung nachgeschaltet ist. Bevorzugt ist, wie oben erwähnt, dass wenigstens ein elektrisches Element ein Kondensator ist.

Bei einer besonders bevorzugten Ausführungsform ist sowohl in dem Anfangsabschnitt als auch in den Endabschnitt der Spuleneinrichtung und insbesondere jedes einzelnen Stranges ein Kondensatorelement angeordnet.

Bei einer weiteren vorteilhaften Ausführungsform ist daher wenigstens einer der beiden Leitungsstränge und sind bevorzugt beide Leitungsstränge sowohl mit ihrem Anfangsabschnitt als auch mit ihrem Endabschnitt elektrisch mit einem Kondensator verbunden, wobei sich es sich insbesondere um eine unmittelbare Verbindung mit diesen Kondensatoren handelt. Es könnten aber andere elektrische Elemente zwischengeschaltet sein, wie etwa Widerstände.

Es wird weiterhin darauf hingewiesen, dass die einzelnen hier beschriebenen Ausführungsformen in beliebiger und/oder technisch sinnvoller Weise miteinander kombinierbar sind.

Bei einer weiteren bevorzugten Ausführungsform weisen die Vorrichtung wenigstens eine und bevorzugt mehrere PFC - Schaltungen (Power Factor Correction) auf. Diese PFC - Schaltungen könnten beispielsweise einem Netzgleichrichter nachgeschaltet werden. Dabei können diese PFC - Schaltungen bevorzugt einphasig ausgebildet sein. Dabei ist die Verwendbarkeit vereinfachter und/oder einphasiger PFC - Schaltungen möglich.

Weitere Vorteile und Ausführungsformen ergeben sich aus den beigefügten Zeichnungen.

Darin zeigen:

Fig. 1        Eine schematische Darstellung einer Spuleneinrichtung nach dem Stand der Technik;

Fig. 2        Eine Darstellung einer erfindungsgemäßen Spuleneinrichtung;

Fig. 3        Ein Aufbau einer erfindungsgemäßen Vorrichtung mit einer entsprechenden Spuleneinrichtung;

Fig. 4        Eine Detaildarstellung der zweiten Induktionsvorrichtung;

Fig. 5        Eine schematische Darstellung einer Litze;

Fig. 6        Eine schematische Darstellung der in Figur 5 gezeigten Litze;

Fig. 7        Eine weitere Schaltungsanordnung für die zweite Induktionsvorrichtung;

Fig. 8        Eine weitere Schaltungsanordnung für die zweite Induktionsvorrichtung;

Fig. 9        Eine weitere Schaltungsanordnung für eine zweite Induktionsvorrichtung;

Fig. 10       eine weitere Ausgestaltung einer Schaltanordnung;

Fig. 11       ein weiteres Beispiel für eine erfindungsgemäße Schaltungsanordnung;

Fig. 12a,b    ein Schaltbild für eine Spuleneinrichtung der ersten oder zweiten Induktionsvorrichtung;

Fig. 13       eine Spuleneinrichtung nach dem Stand der Technik; und

Fig. 14       eine Spuleneinrichtung gemäß einer bevorzugten Ausführungsform der Erfindung.

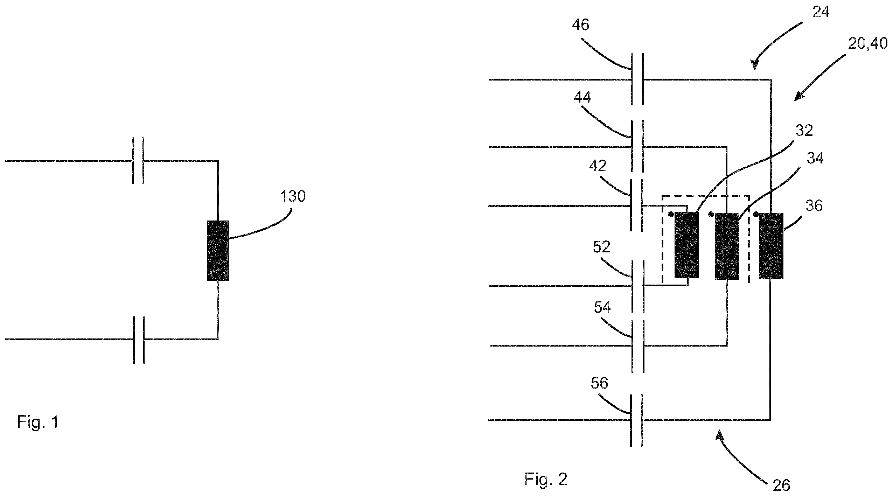

Figur 1 zeigt eine stark vereinfachte Darstellung einer Spulenanordnung. Dabei bezieht sich das Bezugszeichen 130 auf die eigentliche Spule, deren Anfangs- und Endabschnitt jeweils mit einem Kondensator beschaltet ist.

Bei einer bevorzugten Ausführungsform der Erfindung ist es möglich, dass die erste Spuleneinrichtung, beispielsweise die Sendespule, aus mehreren gut gekoppelten, aber bevorzugt galvanisch getrennten Spulen aufgebaut ist. Bei diesen Einzelspulen kann es sich beispielsweise um Einzelstränge einer HF-Litze handeln.

Figur 2 zeigt ein entsprechendes Schaltbild. Dabei sind drei Spulen 32, 34 und 36 dargestellt, welche jeweils Anfangsbereiche 24 und Endbereiche 26 aufweisen (diese drei Spulen können dabei zu einer insgesamt mit 20 bzw. 40 bezeichneten Spuleneinrichtung verseilt oder allgemein verbunden bzw. eng beieinander geführt sein, so dass sie magnetisch gut miteinander koppeln.

In dem Anfangsabschnitt sind jeweils Kondensatoren 42, 44 und 46 geschaltet und in dem Endabschnitt 26 Kondensatoren 52, 54 und 56. Diese drei Spulen 32, 34 und 36 sind hier mit dem Schaltsymbol ihrer gekoppelten Induktivitäten dargestellt. Die Kopplung wird erreicht indem die Spulen eng beieinander geführt gewickelt, oder aber auch ineinander, wie oben erwähnt, gewickelt sind.

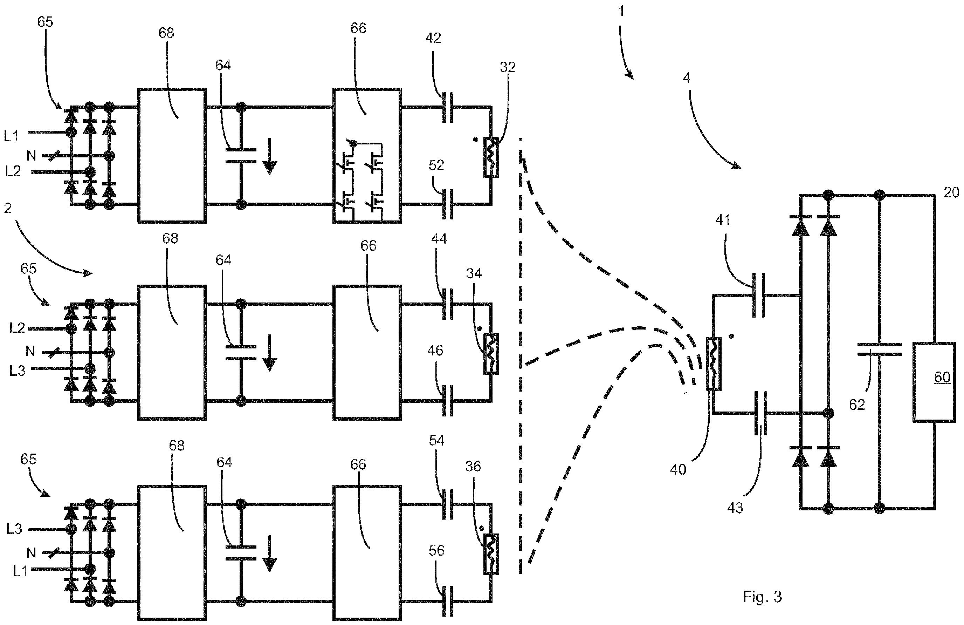

Figur 3 zeigt eine Gesamtdarstellung bzw. einen Schaltplan einer erfindungsgemäßen Vorrichtung 1. Diese Vorrichtung weist eine erste Induktionsvorrichtung 2 auf, welche insbesondere stationär angeordnet ist und welche zum Versorgen einer zweiten Induktionsvorrichtung 4 dient. Die erste Induktionsvorrichtung 2 weist zu diesem Zweck drei Spulen 32, 34 und 36 auf.

Jede dieser Spulen wird aus den Phasen eines Stromnetzes gespeist, nämlich hier die Spule 32 aus den Phasen L1 und L2, die Spule 34 aus den Phasen L2 und L3 und die Spule 36 aus den Phasen L3 und L1. An die jeweiligen Phasen schließen sich Dioden bzw. Gleichrichterelemente an sowie eine PFC-Schaltung (Bezugszeichen 68) (Power Factor Correction).

Bei der hier gezeigten Schaltung besteht ein hoher Freiheitsgrad bei der Wahl der Schaltungstopologie dieser PFC-Schaltung, da einphasige PFC-Schaltungen verwendet werden können. Dadurch ist auch die Regelung der PFC-Schaltung vereinfacht, da nur einphasige Stromregler verwendet werden. Weiterhin ist ein 3-Phasen-Betrieb vom Netz möglich. Ausgleichsströme zwischen den Außenleitern treten wegen der hohen Impedanz $X_c = 1/(\omega*(c/3))$ bei der Netzfrequenz von 50 oder 60 Hz nur mit sehr geringen Amplituden auf. Steht z. B. kein Dreiphasennetz zur Verfügung können die in Fig. 3 dargestellten Netzgleichrichter auch einphasig versorgt werden. Z. B. können alle drei Netzgleichrichter mi L1 und N versorgt werden.

Die Netzgleichrichter mit dem Bezugszeichen 65 in Fig. 3 besitzen jeweils drei Diodenhalbbrücken. An zwei Halbbrücken sind jeweils die Außenleiter L1, L2 und/oder L3 angeschlossen. An jeweils der dritten Diodenhalbbrücke ist der Neutralleiter angeschlossen. Damit soll angezeigt werden, dass bei dem Anschluss eines Neutralleiters zusätzlich zu den jeweils zwei Außenleitern, bei einem Ausfall eines Außenleiters durch z. B. eine abgelöste Leitungsschutzeinrichtung (Sicherung), trotzdem weiterhing ein einphasiger Betrieb möglich ist.

Fällt z. B. der Außenleiter L1 aus, so kann der obere Netzgleichrichter mit L2 und N weiterarbeiten, der mittlere Netzgleichrichter kann ganz normal mit L2 und L3 weiterarbeiten und der untere Netzgleichrichter kann mit L3 und N weiterarbeiten. So wird durch die Aufteilung der Spulen mit Hilfe der verteilten Resonanzkondensatoren der Einsatz von einfachen einphasigen PFC-Schaltungen 68 ermöglicht, welche zusammen mit den dargestellten Netzgleichrichtern 65 eine sehr hohe Verfügbarkeit des Ladesystems gewährleisten.

Das Bezugszeichen 68 bezieht sich jeweils auf eine PFC-Schaltung.

Das Bezugszeichen 64 bezieht sich jeweils auf einen Zwischenkreiskondensator und das Bezugszeichen 66 schematisch auf einen Inverter. An diesen Inverter 66 schließen sich die einzelnen Spulen 32, 34 und 36 an, die jedoch auch miteinander verwickelt sein können, an. Die gestrichelten Linien deuten die magnetische Kopplung an. Dabei koppeln die Spulen 32, 34 und 36 sehr gut magnetisch miteinander, wohingegen die Kopplungen zwischen Spulen 32 und 40, 34 und 40 sowie 36 und 40 je nach Bauart des induktiven Ladesystems im Vergleich relativ gering sein können (i. d. R. zwischen 10 % und 40 %). An diesen Spulen liegt jeweils ein Eingangs- und ein Ausgangskondensator an, wobei dieser jedoch die drittelte Kapazität aufweisen kann, verglichen zu einer Schaltung mit nur einer einzigen Spule. Dies gilt insbesondere für den Fall einer guten magnetischen Kopplung zwischen den Spulen 32, 34, 36.

Die vergleichsweise geringen Kapazitäten der Kondensatoren 42, 52, 44, 46 und 54, 56 führen zu der hohen Impedanz bei der Netzfrequenz von 50 oder 60 Hz.

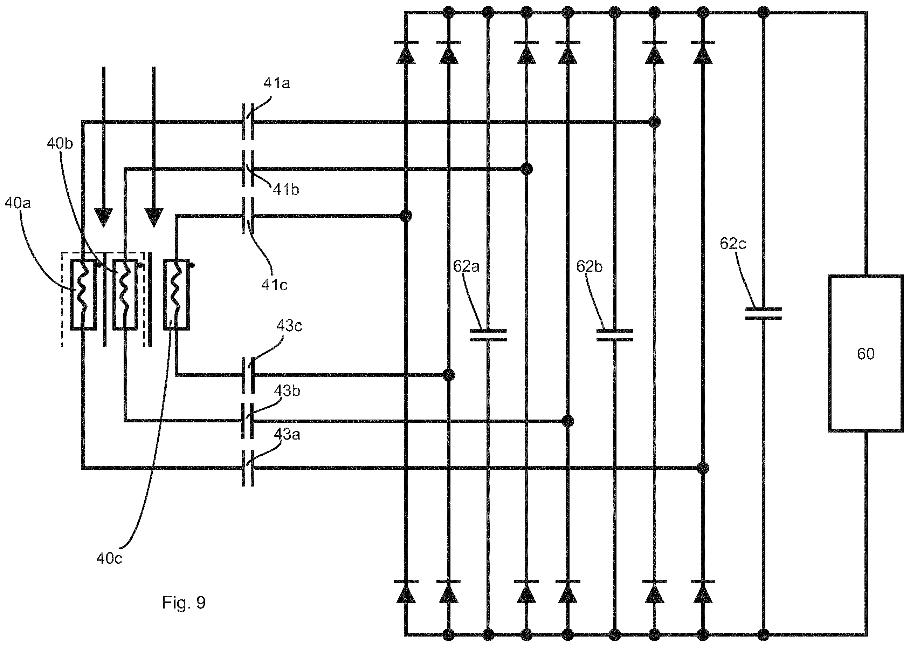

Das von der Spule 32, 34, 36 erzeugte Feld wird hier von einer Spuleneinrichtung 40 aufgenommen, wobei diese Spuleneinrichtung 40 wie oben erwähnt Bestandteil der zweiten Induktionsvorrichtung 4 ist. Auch hier sind wieder zwei Kondensatoren 41 und 43 vorgesehen sowie Gleichrichterelemente (in Form von Dioden) sowie ein Kondensator 62. Vorzugsweise wird die gesamte Induktionsvorrichtung 4 wie in der Fig. 9 ausgeführt.

Das Bezugszeichen 60 bezieht sich auf eine Last, beispielsweise eine zu ladende Autobatterie.

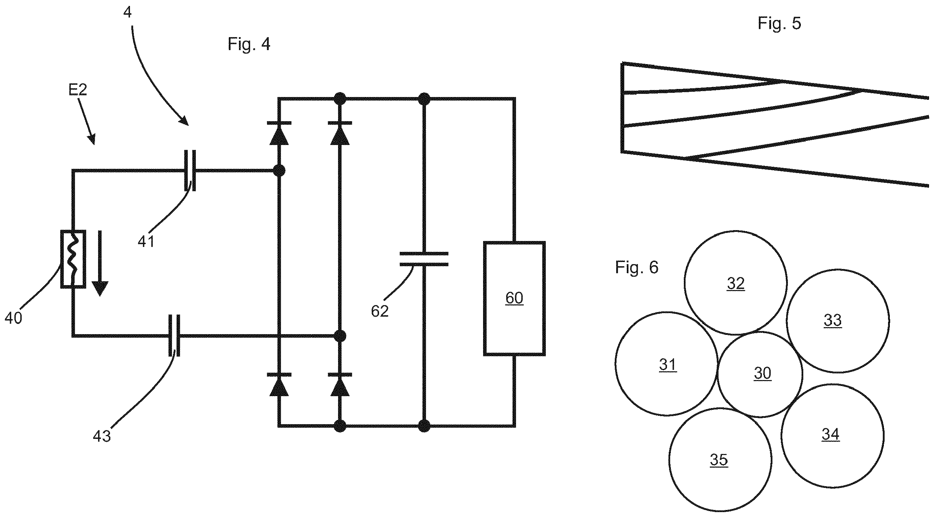

Figur 4 bezieht sich auf die zweite Induktionsvorrichtung 4. Auch hier wird wieder gezeigt, wie die Einzelstränge einer HF-Litze genutzt werden können. Falls beispielsweise die Empfangsspule, d. h. die Spuleneinrichtung 40 eine Induktivität L2 aufweist, kann diese beispielsweise aus fünf Strängen zusammengesetzt sein.

Ein derartiger Aufbau ist in Figuren 5 und 6 dargestellt. In Figur 6 sind hier insgesamt fünf Einzelstränge 31 bis 35 vorgesehen sowie im Zentrum ein nicht leitendes Isolationsmaterial 30. Hierbei kann es sich beispielsweise um einen Kunststoffstrang handeln. Der gleiche Sachverhalt ist auch in Figur 5 gezeigt. Bei der in Figur 4 gezeigten Situation fließt der gesamte Spulenstrom E2 durch die Resonanzkondensatoren 41 und 43. Es fließt auch der gesamte Spulenstrom durch den jeweiligen Gleichrichter, der dem Kondensator 62 vorgeschaltet ist.

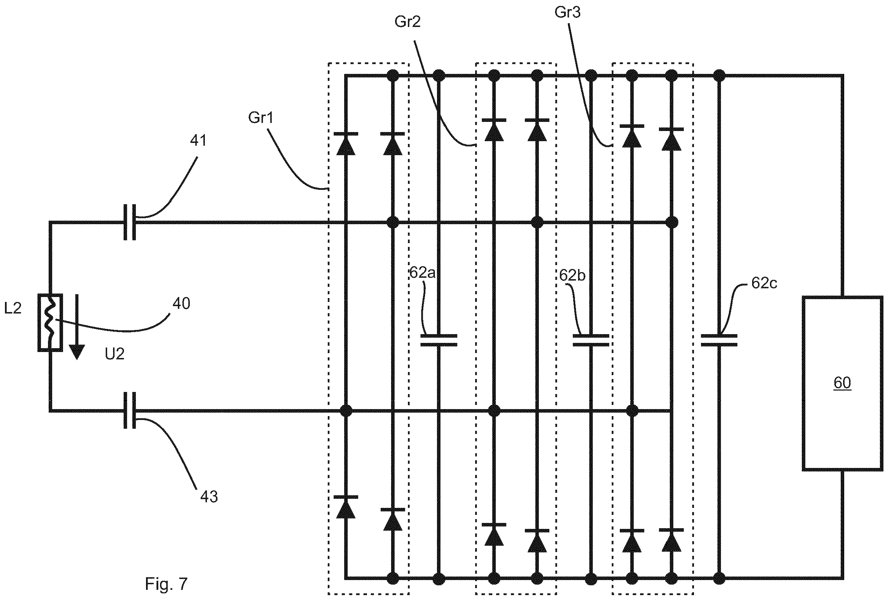

Figur 7 zeigt eine weitere mögliche Ausgestaltung der zweiten Induktionsvorrichtung. Bei dieser Ausgestaltung wird der Strom auf mehrere Gleichrichter (welche hier die jeweils die in der Figur gezeigten vier Dioden aufweisen) verteilt. Auch hier sind drei Kondensatoren 62a, 62b und 62c dargestellt, welche jeweils den einzelnen Gleichrichtern zugeordnet sind.

Man erkennt, dass hier auch die einzelnen Gleichrichter durch die Spule 40 versorgt werden. Eine Symmetrierung der jeweiligen Ströme in den Gleichrichtern kann hier durch die richtige Wahl der Gleichrichterdioden erfolgen. So können bevorzugt Dioden mit einem positiven Temperaturkoeffizienten verwendet werden, wie beispielsweise SIC-Dioden.

Durch Asymmetrien im magnetischen Aufbau der Empfangsspule 40 können auch Proximity-Effekte auftreten, welche die Ausnutzung der HF-Litzen beeinträchtigen und den Wechselstromwiderstand RAC und damit die Verluste erhöhen. Die Bezugszeichen Gr1, Gr2 und Gr3 beziehen sich auf die drei Gleichrichteranordnungen die hier als Vollbrückengleichrichter ausgeführt sind.

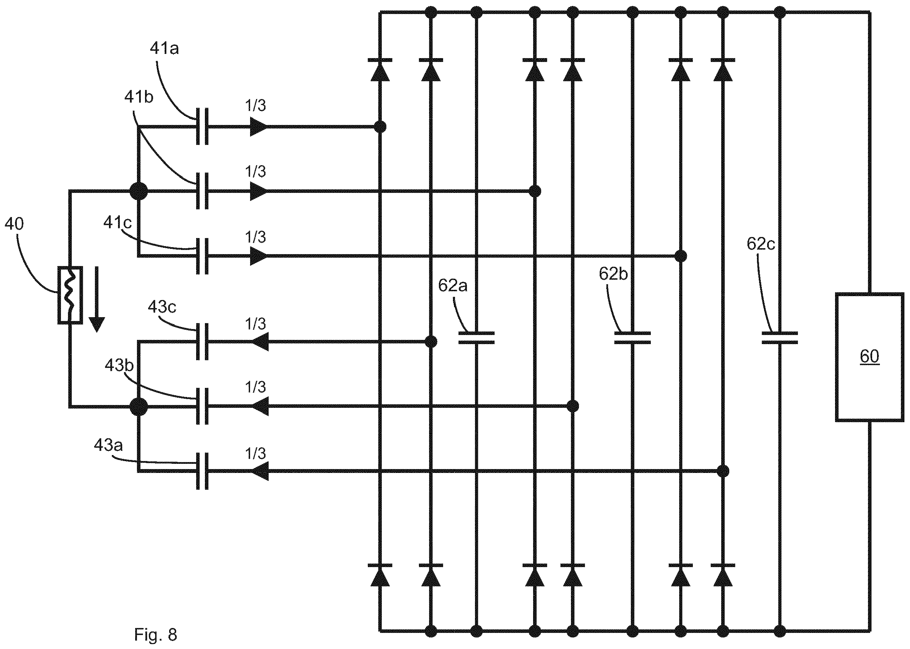

Figur 8 zeigt einen weiteren möglichen Aufbau einer erfindungsgemäßen Induktionsvorrichtung. Bei dieser Aufteilung wird auch der Strom auf mehrere Resonanzkondensatoren und auch mehrere Gleichrichter aufgeteilt. Am Ausgang der Spule 40 befinden sich hier jeweils drei Paare an Kondensatoren. Die in Figur 8 verwendeten Gleichrichterdioden könnten hier auch wiederum SI-Dioden sein.

Besonders bevorzugt handelt es sich um SI-Dioden welche im Gegensatz zu den oben erwähnten SIC - Dioden einen negativen Temperaturkoeffizienten aufweisen. Die Verwendung dieser SI-Dioden ist kostengünstiger und wird auch durch die Beschaltung mit mehreren Kondensatoren möglich, weil diese mehreren Kondensatoren in den Resonanzkreisen mit ihren Impedanzen die Stromsymmetrierung herbeiführen, auch wenn der Einsatz von Si-Dioden die Symmetrierung zunächst erschweren bzw. verhindern würde.

Allerdings treten auch hier wieder Proximity-Effekte in der HF-Litze wie unter Figur 7 gezeigt auf. Es werden allerdings die Ströme auf die einzelnen Zweige verteilt und hier betragen die Ströme jeweils ein Drittel des Gesamtstroms.

Figur 9 zeigt eine weitere mögliche Ausgestaltung der zweiten Induktionsvorrichtung. Auch hier tritt wieder eine Symmetrierung der Gleichrichterströme wie in der vorgezeigten Darstellung auf. Eine Symmetrierung der Ströme in den Einzelsträngen der HF-Litze 40, wobei hier die Einzellitzen 40a, 40b und 40c gezeigt sind, ergibt sich wieder durch die Impedanzen Xc. Allerdings wird bei der in Figur 9 gezeigten Ausgestaltung Proximity-Effekten in der HF-Litze dadurch entgegengewirkt und das Ansteigen des Wechselstromwiderstands RAC wird effektiv verhindert.

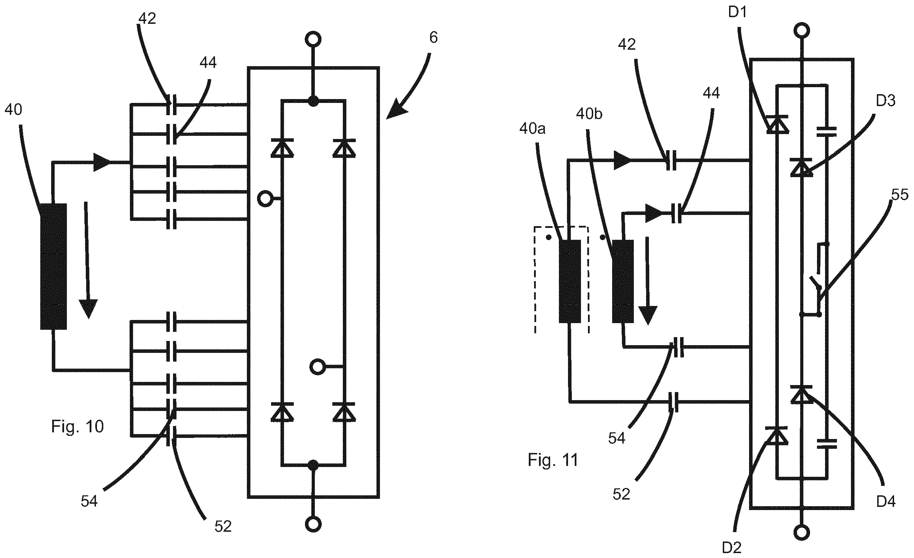

Bei der in Figur 10 gezeigten Ausführungsform ist der Spulenreinrichtung 40 eine elektronische Schaltung bzw. Steuerungseinrichtung 6 in Form einer Gleichrichtereinrichtung nachgeschaltet. Dabei kann es sich bei der Gleichrichtereinrichtung insbesondere um einen Vollbrückengleichrichter handeln.

Figur 11 zeigt eine Anordnung gemäß der Erfindung. Bei dieser Anordnung sind hier zwei praktisch "identische" Wicklungen 40a und 40b vorgesehen, denen jeweils Kondensatoren 42, 44 und 52, 54 nachgeschaltet sind. Bevorzugt ist jeder dieser Spuleneinrichtungen 40 a und 40 b auch eine Gleichrichtereinrichtung mit vier Dioden nachgeschaltet. Das Bezugszeichen 55 kennzeichnet ein Schaltmittel, welches zwischen den Diodeneinrichtungen D1 bis D4 und zwei Kondensatoren angeordnet ist. Mittels dieser Schalteinrichtung kann die gesamte Schaltungseinrichtung 6 zwischen einer Vollbrückengleichrichtereinrichtung und einem Spannungsverdoppler umgeschaltet werden.

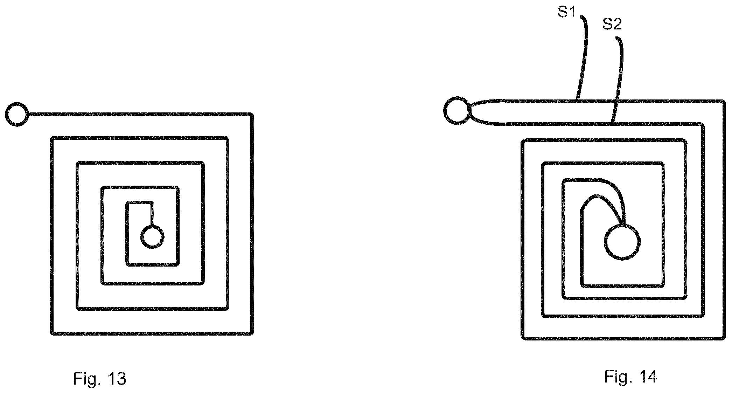

Die Figuren 13 und 14 zeigen eine Gegenüberstellung einer herkömmlichen Spuleneinrichtung und die hier beschriebenen Spuleneinrichtung mit zwei Strängen S1 und S2 (Figur 14). Bei der in Figur 13 gezeigten Situation weist die Spule eine Windungszahl von vier Windungen auf. Die in Figur 14 gezeigte Spule weist eine Windungszahl von zwei Windungen auf. Da die Windungszahl bei der Ermittlung der Induktivität quadratisch eingeht, ergibt sich, dass die Induktivität der in Figur 14 gezeigten Spule bei ansonsten identischem Kupferbild gleich einem Viertel der Induktivität der in Figur 13 gezeigten Spule beträgt.

Die Erfindung wird nun auf die bifilare Spule mit kurzgeschlossenen Wicklungsenden in Fig. 14 angewendet.

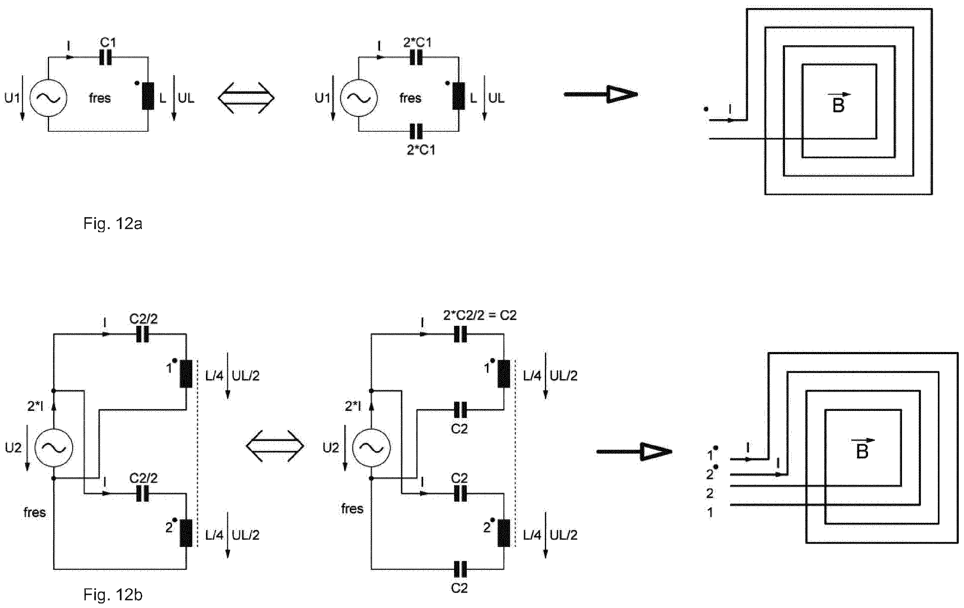

In Fig. 12a, b ist wird die erfindungsgemäße Anordnung hergeleitet. Die in Fig. 12a, b gezeigten Anordnungen können sowohl auf der Sende- als auch auf der Empfangsseite verwendet werden. Zunächst wird in Fig. 12a mit Hilfe eines einfachen Resonanzkreises mit der Resonanzfrequenz fres bestehend aus der Spannungsquelle U1 der Kapazität C1 und der Induktivität L ein symmetrischer Resonanzkreis hergeleitet.

Dabei weist der symmetrische Resonanzkreis die Spannungsquelle U1 die beiden symmetrisch angeordneten Kapazitäten 2*C1 und die Induktivität L auf. Rechts neben den beiden elektrisch äquivalenten einfachen Resonanzkreisen ist eine mögliche Spule mit der Induktivität L dargestellt, welche eine einfache Wicklung mit vier Windungen besitzt. Die Spule erzeugt mit dem Strom I ein Magnetfeld B. Die Spannung zwischen Wicklungsanfang und Wicklungsende ist UL. Es gilt:

$$fres = 1/(2*pi*sqrt(L*C1))$$

In Fig. 12b ist ein Resonanzkreis mit der Resonanzfrequenz fres mit magnetisch gekoppelten Induktivitäten dargestellt. Analog zu Fig. 12a wird ein elektrisch äquivalenter Resonanzkreis mit symmetrisch angeordneten Kapazitäten C2 gebildet.

Bei einer sehr guten magnetischen Kopplung (k > 90 %) gilt in guter Näherung:

$$fres = 1/(2*pi*sqrt(L/4*C2)).$$

Rechts neben den beiden elektrisch äquivalenten Resonanzkreisen mit magnetisch gekoppelten Induktivitäten ist eine mögliche Spule bestehend aus zwei bifilar gewickelten Einzelspulen dargestellt. Diese bifilare Spule weist zu der darüber abgebildeten einfachen Spule eine praktisch identische Geometrie bzw. identisches Kupferbild auf. Jede der bifilar gewickelten Einzelspulen besitzt zwei Windungen und wegen der quadratischen Abhängigkeit der Induktivität von der Windungszahl jeweils eine Induktivität von L/4. Die Spannung zwischen dem jeweiligen Wicklungsanfang und Wicklungsende beträgt UL/2. Die zwei bifilar gewickelten Einzelspulen erzeugen mit dem Strom I zusammen ein Magnetfeld B.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

**Bezugszeichenliste**

| | |
|---|---|
| 1 | Ladeanordnung |
| 2 | erste Induktionsvorrichtung |
| 4 | zweite Induktionsvorrichtung |
| 24 | Anfangsbereich |
| 26 | Endbereich |
| 27,28 | Kondensatoren |
| 30 | Isolationskörper |
| 31 | Einzelstrang |
| 32 | Spule, Einzelstrang |
| 33 | Einzelstrang |
| 34 | Spule, Einzelstrang |
| 35 | Einzelstrang |
| 36 | Spule, Einzelstrang |
| 40 | Spule |
| 40a | Einzellitze |
| 40b | Einzellitze |
| 40c | Einzellitze |
| 41 | Kondensator |
| 42 | Kondensator |
| 43 | Kondensator |
| 44 | Kondensator |
| 46 | Kondensator |
| 52 | Kondensator |
| 54 | Kondensator |
| 56 | Kondensator |
| 60 | Last |
| 62 | Kondensator |
| 62a | Kondensator |
| 62b | Kondensator |
| 62c | Kondensator |
| 64 | Kondensator |
| 65 | Netzgleichrichter |
| 66 | Inverter |
| 68 | PFC - Schaltung |
| 130 | Spule |
| E2 | Spulenstrom |
| L1 | Phase oder Außenleiter |
| L2 | Phase oder Außenleiter |
| L3 | Phase oder Außenleiter |
| $L_1, L_2$ | Induktivitäten |
| Gr1, Gr2, Gr3 | Gleichrichter |

**Patentansprüche**

1. Induktive Ladeanordnung (1) für Kraftfahrzeuge mit einer ersten Induktionsvorrichtung (2), welche insbesondere stationär angeordnet ist und einer zweiten Induktionsvorrichtung (4), welche an dem Kraftfahrzeug montierbar ist,
   wobei die erste Induktionsvorrichtung(2) eine erste Spuleneinrichtung (20) aufweist und die zweite Induktionsvorrichtung (4) eine zweite Spuleneinrichtung (40) aufweist und die erste Spuleneinrichtung (22) und die zweite Spuleneinrichtung (42) zur induktiven Energieübertragung geeignet und bestimmt sind,
   **dadurch gekennzeichnet, dass**
   wenigstens eine Spuleneinrichtung (22) einen Anfangsabschnitt (24) aufweist, der elektrisch mit wenigstens einem weiteren elektrischen Element verbindbar ist sowie einen Endabschnitt, der elektrisch mit wenigsten einem weiteren elektrischen Element verbindbar ist, wobei die Spuleneinrichtung wenigstens zwei Leitungsstränge (32, 34) aufweist und diese beiden Leitungsstränge (32, 34) in dem Anfangsabschnitt (24) und in dem Endabschnitt (26) getrennt voneinander elektrisch mit dem weiteren elektrischen Element verbindbar sind.

2. Induktive Ladeanordnung (1) nach Anspruch 1, **dadurch gekennzeichnet, dass** der zweiten Spuleneinrichtung eine Steuerungseinrichtung (6) nachgeschaltet ist, welche dazu geeignet und bestimmt ist, die zwischen der zweiten Spuleneinrichtung und der Last fließenden Ströme zu beeinflussen bzw. einen vorgegebenen Stromfluss zu ermöglichen und/oder der ersten Spuleneinrichtung (20) eine Steuerungseinrichtung vorgeschaltet ist, welche dazu geeignet und bestimmt ist, die zwischen einem elektrischen Netz und der ersten Spuleneinrichtung fließenden Ströme zu beeinflussen bzw. einen vorgegebenen Stromfluss zu ermöglichen.

3. Induktive Ladeanordnung (1) nach dem vorangegangenen Anspruch, **dadurch gekennzeichnet, dass** die Steuerungseinrichtung (6) eine Spannungsvervielfachereinheit und insbesondere eine Spannungsdopplereinheit (64) aufweist.

4. . Induktive Ladeanordnung (1) nach dem vorangegangenen Anspruch, **dadurch gekennzeichnet, dass** die Steuerungseinrichtung (6) eine Gleichrichtereinheit (62) aufweist.

5. Induktive Ladeanordnung (1) nach den Ansprüchen 3 und 4, **dadurch gekennzeichnet, dass** die Steuerungseinrichtung eine Schalteinrichtung aufweist, welche zwischen einer Diode und einem Kondensatorelement angeordnet ist und welche bevorzugt ein Umschalten zwischen der Gleichrichtereinheit (62) und der Spannungsvervielfachereinheit (64) ermöglicht.

6. Induktive Ladeanordnung (1) nach dem vorangegangenen Anspruch, **dadurch gekennzeichnet, dass** die Ladeanordnung eine DC/DC - Wandlereinrichtung aufweist, welche insbesondere der Steuerungseinrichtung (6) nachgeschaltet ist.

7. Induktive Ladeanordnung (1) nach dem vorangegangenen Anspruch, **dadurch gekennzeichnet, dass** das wenigstens ein elektrisches Element ein Kondensator ist.

8. Induktive Ladeanordnung (1) nach dem vorangegangenen Anspruch, **dadurch gekennzeichnet, dass** sowohl in dem Anfangsabschnitt als auch in dem Endabschnitt ein Kondensatorelement angeordnet ist.

9. Induktive Ladeanordnung (1) nach wenigstens einem der vorangegangenen Ansprüche, **dadurch gekennzeichnet, dass** wenigstens einer der beiden Leitungsstränge (32, 34) und bevorzugt beide Leitungsstränge (32, 34) sowohl mit seinem Anfangsabschnitt (24) als auch mit seinem Endabschnitt (26) elektrisch mit einem Kondensator verbunden ist.

10. Induktive Ladeanordnung (1) nach wenigstens einem der vorangegangenen Ansprüche, **dadurch gekennzeichnet, dass** die Ladeanordnung wenigstens eine PFC - Schaltung aufweist.

11. Spuleneinrichtung (20), insbesondere für eine induktive Ladeanordnung (1) mit einem einen Anfangsabschnitt (24) aufweist, der elektrisch mit wenigstens einem weiteren elektrischen Element verbindbar ist sowie einem Endabschnitt, der elektrisch mit wenigsten einem weiteren elektrischen Element verbindbar ist, wobei die Spuleneinrichtung wenigstens zwei Leitungsstränge (32, 34) aufweist und diese beiden Leitungsstränge (32, 34) in dem Anfangsabschnitt (24) und in dem Endabschnitt (26) getrennt voneinander elektrisch mit weiteren elektrischen Elementen verbindbar sind, wobei die Leitungsstränge sich zumindest abschnittsweise zwischen dem Anfangsabschnitt (24) und dem Endabschnitt (26) berühren und wobei die beiden Leitungsstränge (32, 34) galvanisch voneinander getrennt sind.

Fig. 2

Fig. 1

Fig. 3

Fig. 5

Fig. 6

Fig. 4

Fig. 7

Fig. 8

Fig. 9

Fig. 11

Fig. 10

Fig. 12a

Fig. 12b

Fig. 14

Fig. 13

**Europäisches Patentamt**
**European Patent Office**
**Office européen des brevets**

# EUROPÄISCHER RECHERCHENBERICHT

**Nummer der Anmeldung**

EP 19 18 9334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 014712 A1 (SEW EURODRIVE GMBH & CO [DE]) 6. Dezember 2007 (2007-12-06) | 1,2,7-9, 11 | INV. B60L53/12 B60L53/122 |
| Y | * Absätze [0009], [0035], [0063] - [0067]; Abbildungen 1-3 * | 3-6,10 | H01F27/28 H01F38/14 H02J1/00 |
| | ----- | | H02J50/10 |
| Y | EP 2 667 481 A1 (TECHNOVA INC [JP]; UNIV SAITAMA NAT UNIV CORP [JP]) 27. November 2013 (2013-11-27) * Absätze [0023], [0029], [0051]; Abbildungen 1-13 * | 3-6,10 | |
| | ----- | | |

**RECHERCHIERTE SACHGEBIETE (IPC)**

B60L
H02J
H01F

Der vorliegende Recherchenbericht wurde für alle Patentansprüche erstellt

| Recherchenort | Abschlußdatum der Recherche | Prüfer |
|---|---|---|
| Den Haag | 2. Dezember 2019 | Schury, Dominik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..........................................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 9334

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-12-2019

| Im Recherchenbericht angeführtes Patentdokument | Datum der Veröffentlichung | Mitglied(er) der Patentfamilie | Datum der Veröffentlichung |
|---|---|---|---|
| DE 102007014712 A1 | 06-12-2007 | CN 101454957 A<br>DE 102007014712 A1<br>EP 2030301 A1<br>US 2009160262 A1<br>WO 2007137683 A1 | 10-06-2009<br>06-12-2007<br>04-03-2009<br>25-06-2009<br>06-12-2007 |
| EP 2667481 A1 | 27-11-2013 | CN 103339822 A<br>EP 2667481 A1<br>US 2013293192 A1<br>WO 2012099169 A1 | 02-10-2013<br>27-11-2013<br>07-11-2013<br>26-07-2012 |

EPO FORM P0461

Für nähere Einzelheiten zu diesem Anhang : siehe Amtsblatt des Europäischen Patentamts, Nr.12/82